# EUROPÄISCHE PATENTANMELDUNG

(11) **EP 0 574 719 A2**
(43) Veröffentlichungstag der Anmeldung: **22.12.1993**
(21) Anmeldenummer: 93108121.0
(22) Anmeldetag: 18.05.1993
(51) Int. Cl.: B01J 8/18, C04B 7/43, F27B 7/20

(54) **Verfahren zur Herstellung von Zementklinker**

(30) Priorität: 16.06.1992 DE 4219697
(71) Anmelder: KRUPP POLYSIUS AG, D-59269 Beckum (DE)
(72) Erfinder: Kupper, Detlev, Dr.-Ing., W-4404 Telgte (DE); Rother, Wolfgang, Dipl.-Ing., W-4740 Oelde (DE)
(74) Vertreter: Tetzner, Volkmar, Dr.-Ing. Dr. jur.

(57) **Zusammenfassung**

Die Erfindung betrifft ein Verfahren zur Herstellung von Zementklinker aus feinkörnigem Zementrohmaterial, das nach Vorwärmung (1) und Calcinierung (2) in einer in zwei Stufen (4a,4b) unterteilten Klinkerbrennzone (4) gebrannt und anschließend abgekühlt (7) wird. Optimale Verfahrensverhältnisse insbesondere in der Klinkerbrennzone (4) werden dadurch erzielt, daß das calcinierte Material zunächst in einer durch ein Wirbel- oder Sprudelbett (4a) gebildeten ersten Stufe auf eine Temperatur bis in den Bereich der Sintertemperatur aufgeheizt und dabei eine Aufbaugranulierung des Materiales herbeigeführt wird, worauf dann das so aufgeheizte Material in einer als Garbrandstufe (4b) wirkenden zweiten Stufe der Klinkerbrennzone (4) auf die Sintertemperatur erhitzt und bis zum Garbrand getempert wird.

## Beschreibung

Die Erfindung betrifft ein Verfahren zur Herstellung von Zementklinker aus feinkörnigem Zementrohmaterial, entsprechend dem Oberbegriff des Anspruches 1.

Verfahren zur Herstellung von Zementklinker, bei denen eine thermische Nachbehandlung von weitgehend calciniertem Rohmaterial vor der eigentlichen Brennstufe erfolgt, sind in verschiedenen Ausführungen bekannt. Bei einem dieser bekannten Verfahren (DE-OS 32 37 343) ist zwischen der Calcinierzone und der Fertigbrennzone ein besonderes Aufheizaggregat für das calcinierte Material eingeschaltet. In diesem Aufheizaggregat soll die zur schnellen Aufheizung des Materiales benötigte Wärmemenge dosiert dadurch freigesetzt werden, daß durch eine Vielzahl von über das Aufheizaggregat verteilten Brennstoffzuführungen und/oder Verbrennungsluftzuführungen eine angepaßte Wärmedarbietung eingestellt wird. Hierdurch soll das calcinierte Material auf die Temperatur der beginnenden Alitbildung, die im Mittel etwa bei 1250°C liegen kann, aufgeheizt werden, ohne daß dabei jedoch auch nur in einem Teil des Brennmaterialstromes eine Temperatur auftritt, die die Bildung von Schmelzanteilen ermöglichen würde. Als eine mögliche Ausführungsart des Aufheizaggregates ist zwar die Verwendung eines Wirbelschichtreaktors mit überfließender Wirbelschicht angedeutet; bevorzugt wird jedoch ein Aufheizaggregat, das als im wesentlich senkrecht stehender, schachtförmiger Suspensionsreaktor ausgebildet ist. Wenn bei diesem bekannten Verfahren das Aufheizaggregat - wie erwähnt - mit einer äußerst großen Anzahl von Brennstoff- und/oder Luftzuführstellen versehen ist, dann ergibt sich eine äußerst komplizierte Einstellung für das gewünschte homogene Temperaturprofil, wenn eine unerwünschte Schmelzebildung vermieden werden soll.

Der Erfindung liegt die Aufgabe zugrunde, ein Verfahren der im Oberbegriff des Anspruches 1 vorausgesetzten Art so weiterzuverbessern, daß bei relativ einfacher Ausführung und Betriebsweise der zu seiner Durchführung benutzten Anlage eine rasche Aufheizung des zuvor calcinierten Materiales und einen spontanen Wärmeausgleich zwischen Material und Behandlungsgas in der ersten Stufe der Klinkerbrennzone sowie einen besonders gut steuerbaren Klinkergarbrand des aufgeheizten Materiales in der zweiten Stufe gewährleistet.

Diese Aufgabe wird erfindungsgemäß durch die im Kennzeichen des Anspruches 1 angegebenen Merkmale (insbesondere in deren Kombination) gelöst.

Vorteilhafte Ausgestaltungen dieser Erfindung sind Gegenstand der Unteransprüche.

Nach diesem erfindungsgemäßen Verfahren zur Herstellung von Zementklinker aus feinkörnigem Zementrohmaterial erfolgt die Aufheizung des calcinierten Materiales in der ersten Stufe der Klinkerbrennzone (Aufheizstufe) in einem Wirbel- oder Sprudelbett auf eine Temperatur nahe der Sintertemperatur. Während dieses Aufheizens des calcinierten Materiales wird gleichzeitig eine Aufbaugranulierung dieses Materiales herbeigeführt, und zwar durch eine Wirbel- bzw. Zirkulationsbewegung des Materiales in dieser Aufheizstufe. Das so aufgeheizte Material kann dann in der als Garbrandstufe wirkenden zweiten Stufe der Klinkerbrennzone auf die erforderliche Sintertemperatur erhitzt und bis zum Garbrand getempert werden. Hierbei wirkt sich die in der Aufheizstufe zuvor herbeigeführte Aufbaugranulierung des Rohmateriales noch insofern günstig aus, als die für die Klinkerbildung notwendigen Feststoffreaktionen - zumindest zu einem großen Teil - bereits in der Aufheizstufe ablaufen können, wobei diese Feststoffreaktionen dann in der nachgeschalteten Garbrandstufe zum Klinkergarbrand weiterreagieren.

Bei dieser erfindungsgemäßen Verfahrensweise ist es ferner besonders vorteilhaft, wenn das Aufheizen und die Aufbaugranulierung des calcinierten Materiales in einem mit zumindest angenähertem Rührkesselverhalten betriebenen Sprudelbett, d.h. einem sogenannten "Spouted Bed", durchgeführt werden. Während nämlich in einer klassischen Wirbelschicht bzw. einem Wirbelbett ein großflächiger Anströmboden für eine homogene Begasung und somit Fluidisierung des ganzen Wirbelbettes sorgt, wird in einem Sprudelbett nach Art eines "Spouted Bed" bzw. in einem solchen Sprudelbett-Reaktor der Anströmboden über einen Konus zu einer Düse zusammengezogen, so daß man mit Hilfe eines aufwärts gerichteten Gasstrahles in einem solchen Sprudelbett bzw. Sprudelbett-Reaktor eine interne Materialzirkulation erzielt, indem das Feststoffmaterial zu einem großen Teil in einer Ringzone um einen Aufwärtsstrahl mit großer Dichte wieder in Richtung auf die Düse absinkt und dann erneut aufwärts beschleunigt wird. Hierbei tritt ferner eine interne Gasrezirkulation im Sprudelbett bzw. im zugehörigen Reaktor auf. Auf diese Weise ergibt sich insgesamt ein zumindest angenähertes bzw. nahezu ideales Rührkesselverhalten, wodurch die interne Material- und Gaszirkulation begünstigt wird und somit im zugehörigen Reaktor besonders günstige Strömungs- und Mischverhältnisse auftreten, die einen spontanen Wärmeausgleich von Material und Behandlungsgas bewirken. Im Gegensatz zu der oben beschriebenen bekannten Ausführung mit der Vielfachaufteilung von Brennstoff und Verbrennungsluft, läßt sich bei dem erfindungsgemäßen Verfahren mit einfacher, gezielter Brennstoffzufuhr im Sprudelbett bzw. im zugehörigen Reaktor eine Temperatur exakt einstellen, die unterhalb der für dieses Sprudelbett kritischen Temperatur liegt, bei der der Anlagenbetrieb durch Ansatzbildung von aufgeheiztem Rohmaterial an den Reaktorwänden oder dergleichen gefährdet ist.

Zur Erzeugung von Klinkerminerialien ist ein inniger Teilchenkontakt untereinander, d. h. eine Granulierung notwendig. Nach dem erfindungsgemäßen Verfahren erfolgt - wie erwähnt - in vorteilhafter Weise eine Aufbaugranulierung des calcinierten Materiales bei dessen Aufheizung in der Aufheizstufe, so daß hier der Anfang der Klinkerbildung schon im Wirbel- bzw. vorzugsweise im Sprudelbett vorgenommen wird, was effizienter ist als in der nachfolgenden Garbrandstufe der Klinkerbrennzone. Hierbei wird - im Gegensatz zu dem oben beschriebenen bekannten Verfahren gemäß DE-OS 32 37 343, wonach eine Schmelzebildung im Aufheizaggregat als unerwünscht vermieden werden soll - von der internen Zirkulation im Sprudelbett bewußt eine Schmelzebildung zur Aufbaugranulierung ausgenutzt, und zwar bei der dichten Materialkonzentration, wobei diese interne Zirkulation auch gleichzeitig einen gewissen Selbstreinigungseffekt für die Innenwandung des zugehörigen Reaktors bewirkt. Darüber hinaus bewirkt des erwähnte Rührkesselverhalten in diesem Sprudelbett eine einfach einzustellende, gleichmäßige Reaktionstemperatur.

Im vorgehenden Zusammenhang sei noch allgemein erwähnt, daß die Bildung von Klinkermineralien bei Sintertemperatur mit dem Auftreten der sogenannten Klinkerschmelze verbunden ist. In Abhängigkeit von der chemischen Rohmaterialzusammensetzung und der Temperatur ergibt sich z.B. bei Portland-Zementklinker normalerweise ein Schmelzanteil von etwa 22 bis 27 %, der neben einer Reaktionsbeschleunigung auch die bereits erwähnte Granulierung des Klinkers bewirkt. In dem erfindungsgemäß verwendeten Sprudelbett für die Aufheizstufe kann die Reaktionstemperatur gewissermaßen als "Pre-Sintertemperatur" eingestellt werden, die unabhängig vom Klinkermineralbestand im Material einen Schmelzanteil bzw. Schmelzphasenanteil von beispielsweise 5 bis 7 % oder auch etwas mehr erlaubt, womit die Aufbaugranulierung des calcinierten Materiales in der Aufheizstufe bewirkt und die Festkörperreaktionen beschleunigt werden, ohne daß dabei Verstopfungen auftreten und unerwünschte Großagglomerate gebildet werden können.

Die geschilderte Aufbaugranulierung des calcinierten Materiales in der Aufheizstufe kann im Bedarfsfalle noch dadurch gesteuert werden, daß Anteile von Saatklinker in diese Aufheizstufe (erste Stufe der Klinkerbrennzone) zugeführt wird. Als Saatklinker kann bevorzugt eine aus der Klinkerproduktion abgesiebte Fraktion von etwa 1 bis 3 mm Maschenweite oder im Anfahrzustand der zugehörigen Herstellungsanlage auch eine extern entsprechend erzeugte Klinkerfraktion verwendet werden.

Während des Brennprozesses in der Klinkerbrennzone wird bekanntlich Alit (C₃S) gebildet, das ein Hauptträger für die hydraulischen Eigenschaften und die Festigkeit von Zement ist und hauptsächlich bei der Sinterung aus in vorangegangenen Reaktionen entstandenem Belit (C₂S) und Kalk (CaO). Für den Garbrand des Klinkers sind eine entsprechende Sintertemperatur sowie eine entsprechende Verweilzeit erforderlich, bis der gesamte freie Kalk annähernd verbraucht ist. Bei diesem erfindungsgemäßen Verfahren soll das Wirbel- oder Sprudelbett unabhängig von der Alitbildungsrate bei der Betriebstemperatur betrieben werden, bei der - wie bereits weiter oben teilweise erläutert - eine erste Schmelzebildung auftritt, die eine Granulierung des Materiales zu Klinker und damit sicher auch eine forcierte Alitbildung bewirkt. Dies wird durch die erläuterte Zirkulation und die hohe Dichte des Materiales insbesondere im Sprudelbett bewirkt. Die Betriebstemperatur bzw. Sintertemperatur kann materialabhängig am Optimalpunkt gehalten werden, und zwar so, daß noch keine Materialansätze an der Innenwand des zugehörigen Reaktors auftreten können.

Bei diesem erfindungsgemäßen Verfahren erfolgt der Garbrand in der Garbrandstufe (zweite Stufe der Klinkerbrennzone) vorzugsweise bei einer Temperatur von wenigstens etwa 1300°C, besonders bevorzugt bei etwa 1310 bis 1370°C, und zwar jeweils abhängig von der chemischen Zusammensetzung, der geologischen Genese und der mechanischen Aufbereitung des Rohmateriales. Das aufgeheizte Material wird in dieser Garbrandstufe bevorzugt auf einen Freikalkgehalt von < 1 % gebrannt werden.

In der Aufheizstufe der Klinkerbrennzone, also im Wirbel- oder vorzugsweise im Sprudelbett, kann das calcinierte Material im Grenzfall auch bereits auf etwa Sintertemperatur aufgeheizt werden. In der nachgeschalteten Garbrandstufe der Klinkerbrennzone braucht dann lediglich noch für eine eventuelle restliche Aufheizung auf die notwendige Sintertemperatur gesorgt zu werden, während diese zweite Stufe der Klinkerbrennzone in der Hauptsache nur noch die Aufgabe hat, die nötige Verweilzeit zur Klinkermineralbildung zu ermöglichen, wobei dann unter besonders günstigen Bedingungen eine adiabate Temperung des auf Sintertemperatur gebrachten Materiales in dieser Garbrandstufe durchgeführt wird.

Dieses erfindungsgemäße Verfahren sei anhand eines vereinfachten Anlagenbeispieles nachfolgend noch näher erläutert, das in der als einfaches Anlagenschema beigefügten Zeichnung veranschaulicht ist.

Nach dieser Anlage, die zur Durchführung des erfindungsgemäßen Verfahrens und somit zur Herstellung von Zementklinker aus feinkörnigem Zementrohmaterial ausgebildet ist, wird das Zementrohmaterial zunächst in einer durch einen geeigneten Vorwärmer (insbesondere Suspensions- bzw. Zyklonvorwärmer) 1 gebildeten Vorwärmzone vorgewärmt und dann in einer üblichen Calciniereinrichtung 2, die eine Calcinierzone bildet, weitgehend bzw. nahezu vollkommen calciniert. Das calcinierte Material (gestrichelter Pfeil 3) wird nun einer in zwei Stufen unterteilten Klinkerbrennzone 4 zugeführt, die sich aus einem eine Aufheizstufe (erste Stufe) bildenden Wirbel- oder Sprudelbett-Reaktor 4a und einem eine Garbrandstufe (zweite Stufe) bildenden Garbrand-Reaktor 4b zusammensetzt. Das calcinierte Material (Pfeil 3) wird dementsprechend zuerst dem Reaktor 4a zugeführt, der vorzugsweise als Sprudelbett-Reaktor bzw. "Spouted-Bed"-Reaktor ausgebildet ist und in dem das calcinierte Material auf eine Temperatur bis in den Bereich der Sintertemperatur aufgeheizt wird, wobei während dieses Aufheizens - wie oben erläutert - eine Aufbaugranulierung des Materiales herbeigeführt wird. Das so aufgeheizte und wenigstens teilweise granulierte Material wird dann - gemäß gestricheltem Pfeil 5 - in den Garbrand-Reaktor 4b eingeleitet, in dem es - soweit noch erforderlich - auf die notwendige Sintertemperatur erhitzt und bis zum Garbrand getempert wird.

Der den Garbrand-Reaktor 4b verlassende heiße Klinker wird anschließend - gemäß gestricheltem Pfeil 6 - in einem geeigneten Kühler (Kühlzone) 7 vorzugsweise mit Hilfe von zugeführter Kühlluft (ausgezogene Pfeile 8) abgekühlt.

Die bei diesem Abkühlen des heißen Klinkers - durch Wärmeaustausch - entstehende aufgeheizte Luft bzw. Heißluft wird als zusätzliche Verbrennungsluft in jeweils einstellbaren Anteilen - entsprechend den durchgehenden Linien bzw. Pfeilen 9a, 9b und 9c - dem Garbrand-Reaktor (Garbrandstufe) 4b, dem Wirbel- oder Sprudelbett-Reaktor (Aufheizstufe) 4a und der Calciniereinrichtung (Calcinierzone) 2 zugeleitet werden. Darüber hinaus können die Abgase des Garbrand-Reaktors 4b dem Wirbelbett- bzw. Sprudelbett-Reaktor 4a zur Unterstützung für dessen Aufheizung zugeführt werden (entsprechend durchgehendem Pfeil 10); gegebenenfalls kann - wie durch eine strichpunktierte Linie bzw. einen strichpunktierten Pfeil 11 angedeutet - auch zumindest ein Teil dieser Abgase aus dem Garbrand-Reaktor 4b der Calciniereinrichtung 2 (unter Umgehung des Reaktors 4a) zugeführt werden. Dieser Calciniereinrichtung 2 werden darüber hinaus auch die Abgase des Wirbelbett- oder Sprudelbett-Reaktors 4a zugeleitet (Pfeil 12). Die Abgase (Pfeil 13) dieser Calciniereinrichtung 2 oder zumindest der überwiegende Anteil dieser Abgase wird dann in üblicher Weise noch für das Vorwärmen des Rohmateriales im Vorwärmer 1 ausgenutzt werden.

In üblicher Weise wird der Calciniereinrichtung 2 auch ein entsprechender Anteil eines geeigneten Brennstoffes zugeführt, wie es durch den Pfeil 14 angedeutet ist.

Auch der Klinkerbrennzone 4 muß zusätzlicher Brennstoff zugeführt werden, um in ihren beiden Stufen (4a, 4b) die dort jeweils erforderlichen Temperaturen ganz gezielt einstellen zu können. Hierbei werden erfindungsgemäß - entsprechend Pfeil 15A - im Wirbel- oder Sprudelbett des Reaktors (4a) etwa 80 bis 90 % und - gemäß Pfeil 15b - in der Garbrandstufe, also im Garbrand-Reaktor 4b, etwa die restlichen 10 bis 20 % des für die ganze Klinkerbrennzone 4 bestimmten Brennstoffes eingesetzt.

Der Reaktor 4b für die Garbrandstufe kann vorzugsweise als ein im Gegenstrombetrieb zwischen Material und Gas arbeitender, relativ kurzer Drehrohrofen ausgebildet sein, der gegebenenfalls dick isoliert und ausgemauert ist und der mit - im Vergleich zu üblichen Drehrohröfen - relativ hohen bzw. höheren Materialfüllungsgraden betrieben werden kann.

Durch diese Art des Klinkerbrennens können im Vergleich zu den bisher üblicherweise meist einstufigen Klinkerbrennzone bzw. dafür benutzten einstufigen Drehrohröfen deutliche Vorteile erzielt werden; beispielsweise:
- eine extrem niedrige NOₓ-Bildung in der ersten Stufe (Aufheizstufe der Klinkerbrennzone), die vorzugsweise durch einen mit annähernd Rührkesselverhalten betriebenen Sprudelbett-Reaktor 4a gebildet wird. Erste Untersuchungen haben gezeigt, daß die NOₓ-Emission bezogen auf die NOₓ-Bildung im üblichen einstufigen Drehrohrofen um etwa 70% gemindert werden kann, während sie bei einer Gesamtanlage, die mit einer Calciniereinrichtung arbeitet, in der durch Mehrstufenverbrennung die NOₓ-Bildung bei der Calcinierung bereits um 50 % herabgesetzt worden ist, immerhin noch um etwa 50 % reduziert werden können.
- Aufgrund des erläuterten Rührkesselverhaltens in der vorzugsweise durch einen Sprudelbett-Reaktor 4a gebildeten Aufheizstufe der Klinkerbrennzone werden Temperaturspitzen für das zu behandelnde Material vermieden, wodurch eine gezielte Beeinflussung der Haftkräfte an der Materialoberfläche (zum Herbeiführen der gewünschten Aufbaugranulierung) ermöglicht ist.
- Insbesondere in dem die Aufheizzone bildenden Reaktor 4a wird eine größere Brennstofflexibilität durch eine Verbrennung in der Wirbelschicht oder - vorzugsweise - in einem Sprudelbett ("Spouted-Bed") ermöglicht. Maximale, wie sie heutzutage im Drehrohrofen auftreten, sind in diesem Reaktor 4a nicht erforderlich. Hierdurch können heizwertarme und minderwertige Brennstoffe sowie Brennstoffe mit hoher Materialfeuchte in sehr hohem Umfang nicht nur in der Calcinierzone (Calciniereinrichtung 2), sondern auch in den nachgeschalteten Reaktoren eingesetzt werden.
- Darüber hinaus ist es durch diese Betriebsweise der Klinkerbrennzone 4 auch möglich, in hohem Umfang eine separate Brennstoffaufbereitung mittels Vergasung und/oder Entgasung insbesondere für den Reaktor 4a der Aufheizzone vorzusehen.
- Durch Laborversuche und mathematische Ableitungen ist es ferner auf einfache Weise möglich, eine exakte Dimensionierung der beiden für die Aufheizstufe und die Garbrandstufe der Klinkerbrennzone 4 vorgesehenen Reaktoren 4a und 4b - abgestimmt auf Material und Brennstoff - vorzunehmen.
- Durch die Verwendung eines Wirbel- oder Sprudelbettes zum Aufheizen des calcinierten Materiales in der ersten Stufe der Klinkerbrennzone 4 werden ferner - im Vergleich zu einer herkömmlichen einstufigen Klinkerbrennzone, die durch einen einstufigen Drehrohrofen gebildet wird - der Anteil an drehenden Massen beträchtlich herabgesetzt, wodurch sich eine längere Standzeit der Feuerfest-Auskleidung ergibt und wodurch durch eine dickere Ausmauerung geringere Abstrahlungsverluste herbeigeführt werden können.

Bei diesem erfindungsgemäßen Verfahren können ferner im Bedarfsfalle auch unerwünschte flüchtige Bestandteile durch wenigstens einen Bypass selektiv aus einem Gasstrom im Bereich der Klinkerbrennzone abgezogen werden. So ist es durch die zweistufige Ausführung der Klinkerbrennzone 4 möglich, beispielsweise flüchtige Chlorverbindungen im Bypass selektiv aus den Abgasen (Pfeil 12) der ersten Stufe der Klinkerbrennzone 4, also des Reaktors 4a abzuziehen, und zwar als Teilgasabzug. Flüchtige Schwefelverbindungen werden dagegen vorzugsweise im Bypass selektiv aus den Abgasen (Pfeil 10) der Garbrandstufe der Klinkerbrennzone 4, also des Reaktors 4b abgezogen. Hierdurch kann im Vergleich zu bekannten Ausführungen die gesamte Bypassmenge erheblich herabgesetzt werden.

Damit kann die aus Qualitätsansprüchen oftmals notwendige Alkaliabsenkung im Klinker in Abhängigkeit von der chemischen Rohmaterial- und Brennstoff-Zusammensetzung gezielt gesteuert werden. Je nachdem, ob aus den stofflichen Mengenverhältnissen überwiegend Alkalichloride oder Alkalisulfate in der Gasphase vorliegen, wird der Bypass-Gasstrom gezielt aus dem relevanten Abgasstrom der Stufen 4a und 4b abgezogen.

Es läßt sich also durch diese Abzugsmöglichkeiten unerwünschter flüchtiger Bestandteile eine äußerst gute Steuerung der Fertigproduktqualität und dadurch eine gezielte Beeinflussung des Gehalts an diesen flüchtigen Bestandteil im Klinker herbeiführen.

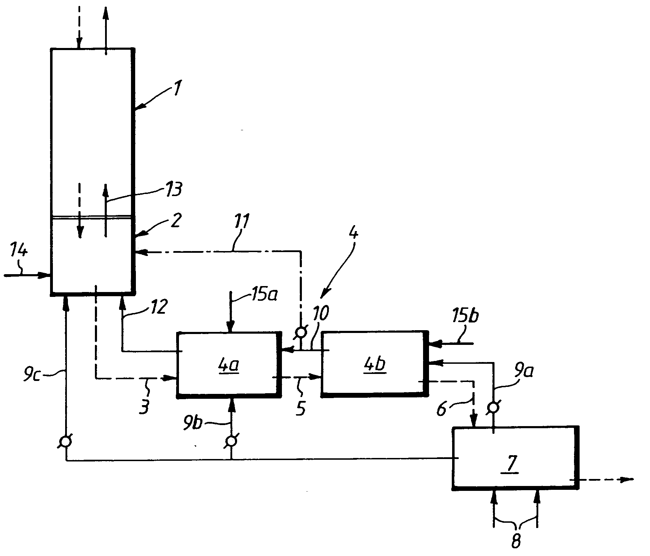

## Patentansprüche

1. Verfahren zur Herstellung von Zementklinker aus feinkörnigem Zementrohmaterial, wobei
a) das Zementrohmaterial in einer Vorwärmzone (1) vorgewärmt,
b) das vorgewärmte Material in einer Calcinierzone (2) zumindest weitgehend calciniert,
c) das calcinierte Material in einer unterteilten Klinkerbrennzone (4)
c₁) in einer ersten Stufe (4a) auf eine vorbestimmte Temperatur aufgeheizt und
c₂) in einer zweiten Stufe (4b) zu Klinker fertiggebrannt und
d) anschließend der heiße Klinker in einer Kühlzone (7) abgekühlt wird,
dadurch gekennzeichnet, daß
e) die Aufheizung des calcinierten Materiales (3) in der ersten Stufe der Klinkerbrennzone in einem Wirbel- oder Sprudelbett (4a) auf eine Temperatur bis in den Bereich der Sintertemperatur erfolgt, wobei während dieses Aufheizens eine Aufbaugranulierung des Materiales herbeigeführt wird, und
f) das so aufgeheizte Material (5) dann in der als Garbrandstufe (4b) wirkenden zweiten Stufe der Klinkerbrennzone (4) auf die Sintertemperatur erhitzt und bis zum Garbrand getempert wird.

2. Verfahren nach Anspruch 1, dadurch gekennzeichnet,
daß das Aufheizen und die Aufbaugranulierung des calcinierten Materiales in einem mit zumindest angenähertem Rührkesselverhalten betriebenen Sprudelbett ("Spouted Bed") durchgeführt werden.

3. Verfahren nach Anspruch 1, dadurch gekennzeichnet,
daß zur Steuerung der Aufbaugranulierung des Materiales Anteile von Saatklinker in der ersten Stufe zugeführt werden.

4. Verfahren nach Anspruch 1, dadurch gekennzeichnet,
daß der Garbrand des Materiales bei einer Temperatur von wenigstens etwa 1300°C, vorzugsweise etwa 1310 bis 1370°C durchgeführt wird.

5. Verfahren nach Anspruch 1, dadurch gekennzeichnet,
daß das aufgeheizte Material in der Garbrandstufe (zweite Stufe) auf einen Freikalkgehalt von < 1 % gebrannt wird.

6. Verfahren nach Anspruch 1, dadurch gekennzeichnet,
daß im Wirbel- oder Sprudelbett (4a) der ersten Stufe der Klinkerbrennzone (4) etwa 80 bis 90 % und in der zweiten Stufe etwa 10 bis 20 % des für die Klinkerbrennzone (4) bestimmten Brennstoffes (15a, 15b) eingesetzt werden.

7. Verfahren nach Anspruch 1, dadurch gekennzeichnet,
daß unerwünschte flüchtige Bestandteile durch wenigstens einen Bypass selektiv aus einem Gasstrom im Bereich der Klinkerbrennzone (4) abgezogen werden.

8. Verfahren nach Anspruch 7, dadurch gekennzeichnet,
daß flüchtige Chloridverbindungen im Bypass bevorzugt aus den Abgasen der ersten Stufe der Klinkerbrennzone abgezogen werden.

9. Verfahren nach Anspruch 7, dadurch gekennzeichnet,
daß flüchtige Sulfatverbindungen im Bypass bevorzugt aus den Abgasen der zweiten Stufe der Klinkerbrennzone abgezogen werden.

10. Verfahren nach Anspruch 1, dadurch gekennzeichnet,
daß die Garbrandstufe (4b) ein insbesondere im Gegenstrombetrieb zwischen Material und Gas arbeitender, relativ kurzer Drehrohrofen verwendet wird.

11. Verfahren nach Anspruch 1, dadurch gekennzeichnet,
daß der Garbrandstufe (4b), der Aufheizstufe (4a) und der Calcinierzone (2) jeweils einstellbare Anteile von in der Kühlzone (7) aufgeheizter Luft zugeleitet werden.
